# EUROPEAN PATENT APPLICATION

(11) **EP 4 102 401 A1**
(43) Date of publication of application: **14.12.2022**
(21) Application number: 22761936.8
(22) Date of filing: 29.01.2022
(51) Int. Cl.: G06K 9/00, G06K 9/62, G06N 3/04, G06N 3/08

(54) **TRAFFIC ANOMALY DETECTION METHOD AND APPARATUS, DEVICE, STORAGE MEDIUM, AND PROGRAM PRODUCT**

(30) Priority: 15.04.2021 CN 202110404411
(71) Applicant: BEIJING BAIDU NETCOM SCIENCE TECHNOLOGY CO., LTD., Beijing 100085 (CN)
(72) Inventor: LI, Yingying, Beijing 100085 (CN); TAN, Xiao, Beijing 100085 (CN); SUN, Hao, Beijing 100085 (CN)
(74) Representative: Richly & Ritschel Patentanwälte PartG mbB
(86) International application number: PCT/CN2022/075044
(87) International publication number: WO 2022/218011

(57) **Abstract**

The present disclosure provides a method and apparatus for detecting a traffic anomaly, a device, a storage medium and a computer program product, relates to the field of artificial intelligence, and specifically to computer vision and deep learning technologies, and can be applied to intelligent transportation scenarios. A specific implementation of the method comprises: acquiring a traffic video stream; performing vehicle detection tracking on the traffic video stream to determine whether there is an abnormally stopped vehicle, wherein a stop with a time length exceeding a preset time length belongs to an abnormal stop; and performing a traffic anomaly classification on a video frame corresponding to the abnormal stop using a decision tree to obtain a traffic anomaly type, if there is the abnormally stopped vehicle, wherein the decision tree is generated based on features for a traffic anomaly detection. This implementation improves the robustness of the traffic anomaly detection.

## Description

### TECHNICAL FIELD

The present disclosure relates to the field of artificial intelligence, and specifically to computer vision and deep learning technologies, and can be applied to intelligent transportation scenarios.

### BACKGROUND

Traffic anomaly detection plays a very critical role in a safe city. A traffic anomaly will greatly reduce the efficiency of traffic flow, and thus needs to be detected and monitored. If there is an in-time warning and rescue when there is a traffic anomaly, the traffic inconvenience caused by the traffic anomaly can be eliminated as soon as possible to resume normal traffic.

The traditional traffic anomaly detection methods mainly include an electromagnetic induction loop coil type and an electromagnetic induction wave type, both of which are to detect vehicle information using the change in frequency of reflected waves when vehicles pass by.

### SUMMARY

Embodiments of the present disclosure propose a method and apparatus for detecting a traffic anomaly, a device, a storage medium and a computer program product.

In a first aspect, embodiments of the present disclosure provide a method for detecting a traffic anomaly, comprising: acquiring a traffic video stream; performing vehicle detection tracking on the traffic video stream to determine whether there is an abnormally stopped vehicle, wherein a stop with a time length exceeding a preset time length belongs to an abnormal stop; and performing a traffic anomaly classification on a video frame corresponding to the abnormal stop using a decision tree to obtain a traffic anomaly type, if there is the abnormally stopped vehicle, wherein the decision tree is generated based on features for a traffic anomaly detection.

In a second aspect, embodiments of the present disclosure provide an apparatus for detecting a traffic anomaly, comprising: an acquiring module, configured to acquire a traffic video stream; a tracking module, configured to perform vehicle detection tracking on the traffic video stream to determine whether there is an abnormally stopped vehicle, wherein a stop with a time length exceeding a preset time length belongs to an abnormal stop; and a classifying module, configured to perform a traffic anomaly classification on a video frame corresponding to the abnormal stop using a decision tree to obtain a traffic anomaly type, if there is the abnormally stopped vehicle, wherein the decision tree is generated based on features for a traffic anomaly detection.

In a third aspect, embodiments of the present disclosure provide an electronic device, comprising: one or more processors; and a memory, storing one or more programs, wherein the one or more programs, when executed by the one or more processors, cause the one or more processors to implement the method provided by the first aspect.

In a fourth aspect, embodiments of the present disclosure provide a computer-readable medium, storing a computer program thereon, wherein the program, when executed by a processor, causes the processor to implement the method provided by the first aspect.

In a fifth aspect, an embodiment of the present disclosure provides a computer program product, comprising a computer program, wherein the computer program, when executed by a processor, implements the method provided by the first aspect.

It should be understood that the content described in this part is not intended to identify key or important features of the embodiments of the present disclosure, and is not used to limit the scope of the present disclosure. Other features of the present disclosure will be easily understood through the following description.

### BRIEF DESCRIPTION OF THE DRAWINGS

Through the detailed description of non-limiting embodiments given with reference to the following accompany drawings, other features, objectives and advantages of the present disclosure will become more apparent. The accompanying drawings are used for a better understanding of the scheme, and do not constitute a limitation to the present disclosure. Here:
Fig. 1 illustrates an exemplary system architecture in which embodiments of the present disclosure may be applied;
Fig. 2 is a flowchart of an embodiment of a method for detecting a traffic anomaly according to the present disclosure;
Fig. 3 is a schematic diagram of a decision tree;
Fig. 4 is a flowchart of another embodiment of the method for detecting a traffic anomaly according to the present disclosure;
Fig. 5 is a schematic structural diagram of an embodiment of an apparatus for detecting a traffic anomaly according to the present disclosure; and
Fig. 6 is a block diagram of an electronic device used to implement the method for detecting a traffic anomaly according to the embodiments of the present disclosure.

### DETAILED DESCRIPTION OF EMBODIMENTS

Exemplary embodiments of the present disclosure are described below in combination with the accompanying drawings, and various details of the embodiments of the present disclosure are included in the description to facilitate understanding, and should be considered as exemplary only. Accordingly, it should be recognized by one of ordinary skill in the art that various changes and modifications may be made to the embodiments described herein without departing from the scope and spirit of the present disclosure. Also, for clarity and conciseness, descriptions for well-known functions and structures are omitted in the following description.

It should be noted that the embodiments in the present disclosure and the features in the embodiments may be combined with each other on a non-conflict basis. The present disclosure will be described in detail below with reference to the accompanying drawings and in combination with the embodiments.

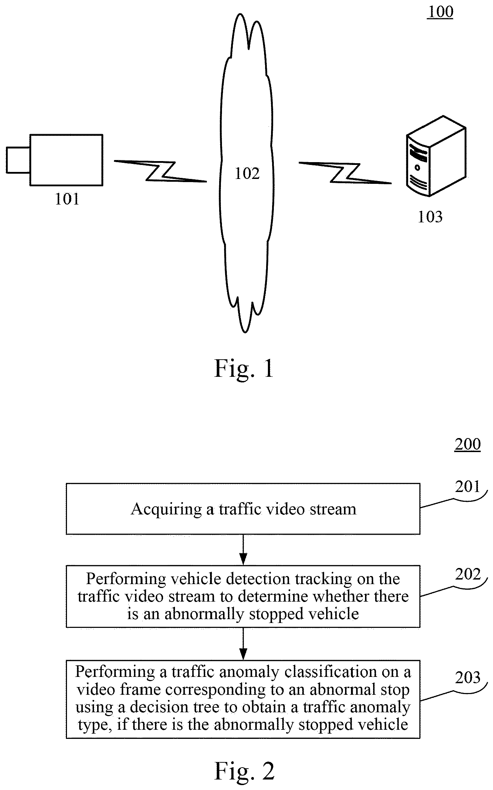

Fig. 1 illustrates an exemplary system architecture 100 in which an embodiment of a method for detecting a traffic anomaly or an apparatus for detecting a traffic anomaly according to embodiments of the present disclosure may be applied.

As shown in Fig. 1, the system architecture 100 may include a video collection device 101, a network 102 and a server 103. The network 102 serves as a medium providing a communication link between the video collection device 101 and the server 103. The network 102 may include various types of connections, for example, wired or wireless communication links, or optical fiber cables.

The video collection device 101 may interact with the server 103 via the network 102 to receive or send images, etc.

The video collection device 101 may be hardware or software. When being the hardware, the video collection device 101 may be various electronic devices having a camera. When being the software, the video collection device 101 may be installed in the above electronic devices. The video collection device 101 may be implemented as a plurality of pieces of software or a plurality of software modules, or as a single piece of software or a single software module, which will not be specifically limited here.

The server 103 may provide various services. For example, the server 103 may perform processing such as an analysis on a traffic video stream acquired from the video collection device 101, and generate a processing result (e.g., a traffic anomaly type).

It should be noted that the server 103 may be hardware or software. When being the hardware, the server 103 may be implemented as a distributed server cluster composed of a plurality of servers, or may be implemented as a single server. When being the software, the server 103 may be implemented as a plurality of pieces of software or a plurality of software modules (e.g., software or software modules for providing a distributed service), or may be implemented as a single piece of software or a single software module, which will not be specifically defined here.

It should be noted that the method for detecting a traffic anomaly provided in the embodiments of the present disclosure is generally performed by the server 103, and correspondingly, the apparatus for detecting a traffic anomaly is generally provided in the server 103.

It should be appreciated that the numbers of the video collection devices, the networks, and the servers in Fig. 1 are merely illustrative. Any number of video collection devices, networks, and servers may be provided based on actual requirements.

Further referring to Fig. 2, Fig. 2 illustrates a flow 200 of an embodiment of a method for detecting a traffic anomaly according to the present disclosure. The method for detecting a traffic anomaly includes the following steps:
Step 201, acquiring a traffic video stream.

In this embodiment, an executing body (e.g., the server 103 shown in Fig. 1) of the method for detecting a traffic anomaly may acquire the traffic video stream from a video collection device (e.g., the video collection device 101 shown in Fig. 1).

Generally, the video collection device is fixedly mounted to collect video streams within the range of its camera. For example, an electronic eye mounted on a signal light pole or a monitoring light pole can collect a traffic video stream and can be applied to the field of intelligent transportation. Here, the video collection device may continuously collect still images at intervals of a certain time length (e.g., 40 milliseconds), and thus can obtain a traffic video stream. The traffic video stream may record a passing process of a vehicle, a pedestrian, or the like.

Step 202, performing vehicle detection tracking on the traffic video stream to determine whether there is an abnormally stopped vehicle.

In this embodiment, the above executing body may perform the vehicle detection tracking on the traffic video stream to determine whether there is the abnormally stopped vehicle.

Generally, during the passing of a vehicle, a normal vehicle that stops normally (e.g., waits for a traffic light) has a short stop time, and an abnormal vehicle that stops abnormally (e.g., forced to stop or stops in violation of regulations) has a long stop time. Therefore, a vehicle having a stop time exceeding a preset time length (e.g., 10 minutes) can be determined as an abnormally stopped vehicle.

For any vehicle in the traffic video stream, the above executing body may detect a position of the vehicle on a video frame in the traffic video stream. If the positions of the vehicle on a number (e.g., 1500 frames) of consecutive video frames are unchanged, it is determined that the vehicle is an abnormally stopped vehicle. Since the video collection device collects one video frame at intervals of a certain time length (e.g., 40 milliseconds), the stop time of the vehicle can be obtained by calculating the product of the time length and the number of video frames on which the positions are unchanged.

Step 203, performing a traffic anomaly classification on a video frame corresponding to an abnormal stop using a decision tree to obtain a traffic anomaly type, if there is the abnormally stopped vehicle.

In this embodiment, if there is the abnormally stopped vehicle, the above executing body may perform the traffic anomaly classification on the video frame corresponding to the abnormal stop using the decision tree, to obtain the traffic anomaly type. Here, the traffic anomaly type may include, but not limited to, a vehicle-vehicle collision type, a vehicle-human collision type, an illegal parking type, a break-down type, and the like.

Here, the decision tree may be generated based on features for a traffic anomaly detection. Different traffic anomaly types correspond to different features, and thus, decision trees may be constructed based on the features of the different traffic anomaly types here. The decision tree is a tree, in which a root node and an internal node are decision conditions of the inputted feature and a leaf node is a final result.

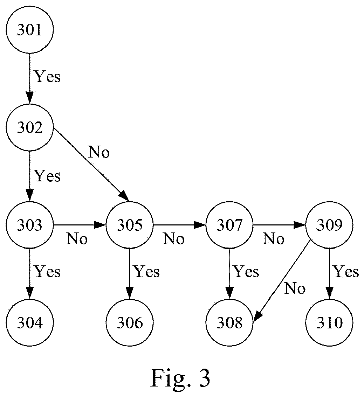

For ease of understanding, Fig. 3 illustrates a schematic diagram of a decision tree. As shown in Fig. 3, the input of training data has a total of six features: whether there is an abnormally stopped vehicle, whether a number of abnormally stopped vehicles is more than one, whether there is a contact between the abnormally stopped vehicles, whether there is an abnormal human body, whether a stop position of the abnormally stopped vehicle is on a side of a road, and whether there is a warning sign. According to these training data, a decision tree can be constructed. The specific steps are as follows:
First, a root node is selected.

In various types of traffic anomalies, there is always an abnormally stopped vehicle. Therefore, whether there is the abnormally stopped vehicle may be used as the root node 301.

Next, an internal node and a leaf node are selected.

The features of a vehicle-vehicle collision type further include: whether the number of the abnormally stopped vehicles is more than one, and whether there is the contact between the abnormally stopped vehicles. Therefore, whether the number of the abnormally stopped vehicles is more than one may be used as the child node 302 of the root node 301, whether there is the contact between the abnormally stopped vehicles may be used as the child node 303 of the node 302, and the vehicle-vehicle collision type may be used as the leaf node 304 of the node 303.

In the features of a vehicle-human collision type, there is no limitation to whether the number of the abnormally stopped vehicles is more than one or equal to one. For the situation where the features include the number of the abnormally stopped vehicles being one, there being the abnormal human body is further included. For the situation where the features include the number of the abnormally stopped vehicles being more than one, there being no contact between the abnormally stopped vehicles and there being the abnormal human body are further included. Therefore, whether there is the abnormal human body may be used as the child node 305 of the node 302 and the node 303, and the vehicle-human collision type may be used as the leaf node 306 of the node 305.

Similarly, in the features of an illegal parking type, there is no limitation to whether the number of the abnormally stopped vehicles is more than one or equal to one. For the situation where the features include the number of the abnormally stopped vehicles being one, there being no abnormal human body and the stop position of the abnormally stopped vehicle being on the side of the road are further included. For the situation where the features include the number of the abnormally stopped vehicles being more than one, there being no contact between the abnormally stopped vehicles, there being no abnormal human body and the stop position of the abnormally stopped vehicle being on the side of the road are further included. Therefore, whether the stop position of the abnormally stopped vehicle is on the side of the road may be used as the child node 307 of the node 305, and the illegal parking type may be used as the leaf node 308 of the node 307.

Similarly, in the features of a break-down type, there is no limitation to whether the number of the abnormally stopped vehicles is more than one or equal to one. For the situation where the features include the number of the abnormally stopped vehicles being one, there being no abnormal human body, the stop position of the abnormally stopped vehicle being not on the side of the road and there being the warning sign are further included. For the situation where the features include the number of the abnormally stopped vehicles being more than one, there being no contact between the abnormally stopped vehicles, there being no abnormal human body, the stop position of the abnormally stopped vehicle being not on the side of the road and there being the warning sign are further included. Therefore, whether there is the warning sign may be used as the child node 309 of the node 307, and the break-down type may be used as the leaf node 310 of the node 309. In addition, for the situation where the features further include there being no warning sign, this situation corresponds to the illegal parking type. Therefore, the leaf node 308 may be used as the leaf node of the node 309.

The embodiment of the present disclosure provides a method of detecting a traffic anomaly based on a video stream. First, the detection tracking is performed on the traffic video stream to determine the abnormally stopped vehicle. Then, the decision tree is used to perform the traffic anomaly classification. Accordingly, the method can be integrated into an intelligent transportation system to troubleshoot problems as soon as possible to resume normal traffic. Moreover, the abnormally stopped vehicle is determined through the detection tracking, which will not be affected by a change of a shooting angle, a high-density traffic flow, a target vehicle gear, a weather condition (e.g., rain, and snow), a light change (e.g., day and night), low resolution of collected data, a lack of real scenario data and other factors, thus improving the robustness of traffic anomaly detection. The traffic anomaly classification is performed through the decision tree. Since the decision tree is generated based on the features for the traffic anomaly detection, and thus can provide more comprehensive traffic information, which makes the traffic anomaly detection result more comprehensive.

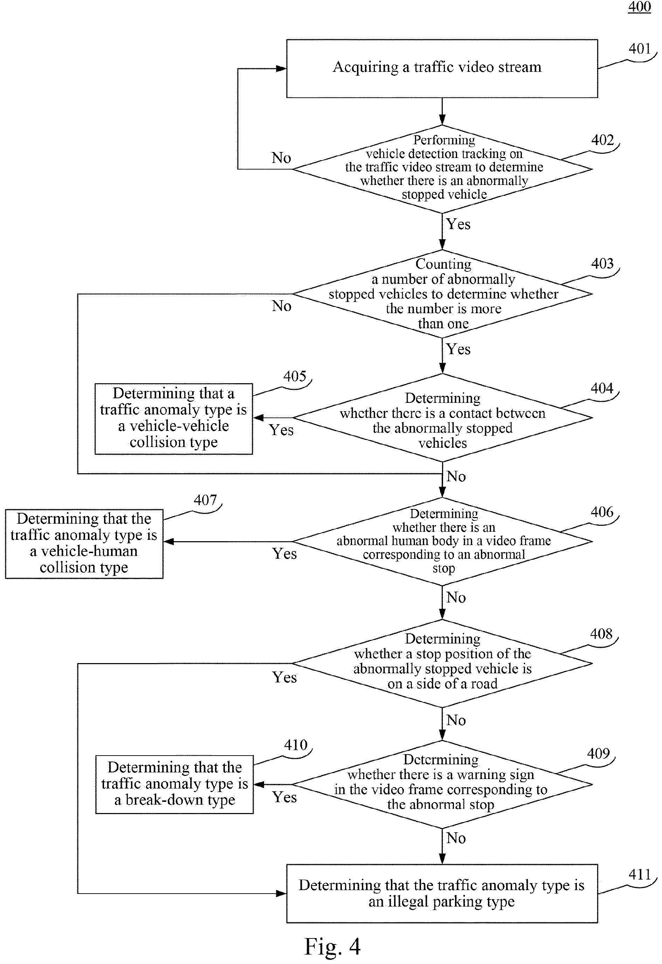

Further referring to Fig. 4, Fig. 4 illustrates a flow 400 of another embodiment of the method for detecting a traffic anomaly according to the present disclosure. The method for detecting a traffic anomaly includes the following steps:
Step 401, acquiring a traffic video stream.

Step 402, performing vehicle detection tracking on the traffic video stream to determine whether there is an abnormally stopped vehicle.

In this embodiment, the detailed operations of steps 401-402 are described in steps 201-202 in the embodiment shown in Fig. 2, and thus will not be repeatedly described here.

In some alternative implementations of this embodiment, the above executing body may first input the traffic video stream into a pre-trained vehicle detection tracking model to obtain a vehicle detection tracking result; and then determine whether there is the abnormally stopped vehicle based on the vehicle detection tracking result. Here, the vehicle detection tracking result may include a vehicle travel trajectory. The vehicle travel trajectory may represent a change of a vehicle position over time. If the vehicle position in the vehicle travel trajectory does not change over a predetermined period of time, it indicates that the vehicle is an abnormally stopped vehicle. The vehicle detection tracking model can be used to perform detection tracking on vehicles, and is obtained by training a neural network using a training sample set. here, a training sample in the training sample set may include a sample traffic video stream and a sample vehicle travel trajectory. By performing detection tracking on the vehicle based on a deep learning method, the efficiency and accuracy of the detection tracking are improved.

Step 403, counting a number of abnormally stopped vehicles to determine whether the number is more than one.

In this embodiment, if there is the abnormally stopped vehicle, the above executing body can count the number of the abnormally stopped vehicles to determine whether the number is more than one. If the number of the abnormally stopped vehicles is more than one, step 404 is performed. If the number of the abnormally stopped vehicles is one, step 406 is performed.

It should be noted that, when the number of the abnormally stopped vehicles is counted, the counted number refers to the number of the abnormally stopped vehicles in the same video frame. Since the detection tracking is performed on the video frames in the traffic video stream frame by frame during the vehicle detection tracking, when the vehicle detection tracking result is obtained, the number of the abnormally stopped vehicles can be obtained at the same time.

Step 404, determining whether there is a contact between the abnormally stopped vehicles.

In this embodiment, if the number of the abnormally stopped vehicles is more than one, the above executing body can determine whether there is the contact between the abnormally stopped vehicles. If there is the contact between the abnormally stopped vehicles, step 405 is performed. If there is no contact between the abnormally stopped vehicles, step 406 is performed.

In some alternative implementations of this embodiment, the above executing body may calculate an intersection-over-union between the bounding boxes of the abnormally stopped vehicles. If the intersection-over-union is not equal to 0, it is determined that there is a contact between the abnormally stopped vehicles. If the intersection-over-union is equal to 0, it is determined that there is no contact between the abnormally stopped vehicles. Accordingly, whether there is a contact between the abnormally stopped vehicles can be quickly determined.

Generally, when the vehicle detection tracking is performed on the traffic video stream, the bounding box of a vehicle is detected to determine the position of the vehicle. If the number of the abnormally stopped vehicles is more than one, there may be a plurality of bounding boxes of the abnormally stopped vehicles on the corresponding video frame. If there is an intersection between the bounding boxes of at least two abnormally stopped vehicles, the intersection-over-union is not equal to 0, indicating that there is a contact between the abnormally stopped vehicles. If there is no intersection between the bounding boxes of all the abnormally stopped vehicles, the intersection-over-union is equal to 0, indicating that there is no contact between the abnormally stopped vehicles.

Step 405, determining that a traffic anomaly type is a vehicle-vehicle collision type.

In this embodiment, if the number of the abnormally stopped vehicles is more than one and there is a contact between the abnormally stopped vehicles, it can be determined that the traffic anomaly type is the vehicle-vehicle collision type.

Step 406, determining whether there is an abnormal human body in a video frame corresponding to an abnormal stop.

In this embodiment, if the number of the abnormally stopped vehicles is one, or if the number of the abnormally stopped vehicles is more than one and there is no contact between the abnormally stopped vehicles, the above executing body may further determine whether there is the abnormal human body in the video frame corresponding to the abnormal stop. If there is the abnormal human body, step 407 is performed. If there is no abnormal human body, step 408 is performed. Here, the abnormal human body may refer to a human having an abnormal behavior. For example, when passing normally, a pedestrian on the road is walking upright or riding in a sitting posture. When a traffic accident occurs, the pedestrian on the road is usually sitting on the ground or lying on the ground. The abnormal human body may be a human sitting on the ground or lying on the ground.

In some alternative implementations of this embodiment, the above executing body may first input the video frame corresponding to the abnormal stop into a pre-trained human behavior model to obtain a human behavior result; and then determine whether there is the abnormal human body in the video frame corresponding to the abnormal stop based on the human behavior result. Here, the human behavior result is used to record a human behavior. If the human behavior refers to sitting on the ground or lying on the ground, the corresponding human body is an abnormal human body. The human behavior model can be used to detect a human behavior, and is obtained by training a neural network using a training sample set. Here, a training sample in the training sample set may include a sample video frame and a sample human behavior tag. By performing a detection on the human behavior based on a deep learning method, the efficiency and accuracy of the detection on the human behavior are improved.

Step 407, determining that the traffic anomaly type is a vehicle-human collision type.

In this embodiment, if there is the abnormal human body, it can be determined that the traffic anomaly type is the vehicle-human collision type.

Step 408, determining whether a stop position of the abnormally stopped vehicle is on a side of a road.

In this embodiment, if there is no abnormal human body, the above executing body can determine whether the stop position of the abnormally stopped vehicle is on the side of the road. If the stop position of the abnormally stopped vehicle is on the side of the road, step 411 is performed. If the stop position of the abnormally stopped vehicle is not on the side of the road, step 409 is performed.

Generally, a roadside region may be inputted in advance to determine whether the vehicle position is within the roadside region. If the vehicle position is within the roadside region, it indicates that the stop position of the abnormally stopped vehicle is on the side of the road. If the vehicle position is outside the roadside region, it indicates that the stop position of the abnormally stopped vehicle is not on the side of the road.

Step 409, determining whether there is a warning sign in the video frame corresponding to the abnormal stop.

In this embodiment, if the stop position of the abnormally stopped vehicle is not on the side of the road, the above executing body can determine whether there is the warning sign in the video frame corresponding to the abnormal stop. If there is the warning sign, step 410 is performed. If there is no warning sign, step 411 is performed. Here, the warning sign is typically a triangle sign.

In some alternative implementations of this embodiment, the above executing body may first input the video frame corresponding to the abnormal stop into a pre-trained warning sign detection model to obtain a warning sign detection result; and then determine whether there is the warning sign in the video frame corresponding to the abnormal stop based on the warning sign detection result. Here, the warning sign detection model can be used to detect the warning sign, and is obtained by training a neural network using a training sample set. Here, a training sample in the training sample set may include a sample video frame and a sample warning sign tag. By performing a detection on the warning sign based on a deep learning method, the efficiency and accuracy of the detection on the warning sign are improved.

Step 410, determining that the traffic anomaly type is a break-down type.

In this embodiment, if there is the warning sign, it can be determined that the traffic anomaly type is the break-down type.

Step 411, determining that the traffic anomaly type is an illegal parking type.

In this embodiment, if the stop position of the abnormally stopped vehicle is on the side of the road or if the stop position of the abnormally stopped vehicle is not on the side of the road and there is no warning sign, it can be determined that the traffic anomaly type is the illegal parking type.

It can be seen from Fig. 4 that, as compared with the embodiment corresponding to Fig. 2, the method for detecting a traffic anomaly in this embodiment emphasizes a traffic anomaly classification step. Accordingly, in the scheme described in this embodiment, the features for the traffic anomaly detection are mined from the traffic video stream, and the decision tree is searched according to the features for the traffic anomaly detection, and thus the type of the traffic anomaly can be quickly matched. For example, if the mined features include the number of the abnormally stopped vehicles being more than one and there being the contact, the vehicle-vehicle collision type can be quickly found from the decision tree. If the mined features include the number of the abnormally stopped vehicles being one and there being the abnormal human body, of if the mined features include the number of the abnormally stopped vehicles being more than one, there being no contact and there being the abnormal human body, the vehicle-human collision type can be quickly found from the decision tree. If the mined features include the number of the abnormally stopped vehicles being one, there being no abnormal human body and the stop position of the abnormally stopped vehicle being on the side of the road, or if the mined features include the number of the abnormally stopped vehicles being more than one, there being no contact, there being no abnormal human body and the stop position of the abnormally stopped vehicle being on the side of the road, or if the mined features include the number of the abnormally stopped vehicles being one, there being no abnormal human body, the stop position of the abnormally stopped vehicle being not on the side of the road and there being no warning sign, or if the mined features include the number of the abnormally stopped vehicles being more than one, there being no contact, there being no abnormal human body, the stop position of the abnormally stopped vehicle being not on the side of the road and there being no warning sign, the illegal parking type can be quickly found from the decision tree. If the mined features include the number of the abnormally stopped vehicles being one, there being no abnormal human body, the stop position of the abnormally stopped vehicle being not on the side of the road and there being the warning sign, or if the mined features include the number of the abnormally stopped vehicles being more than one, there being no contact, there being no abnormal human body, the stop position of the abnormally stopped vehicle being not on the side of the road and there being the warning sign, the break-down type can be quickly found from the decision tree.

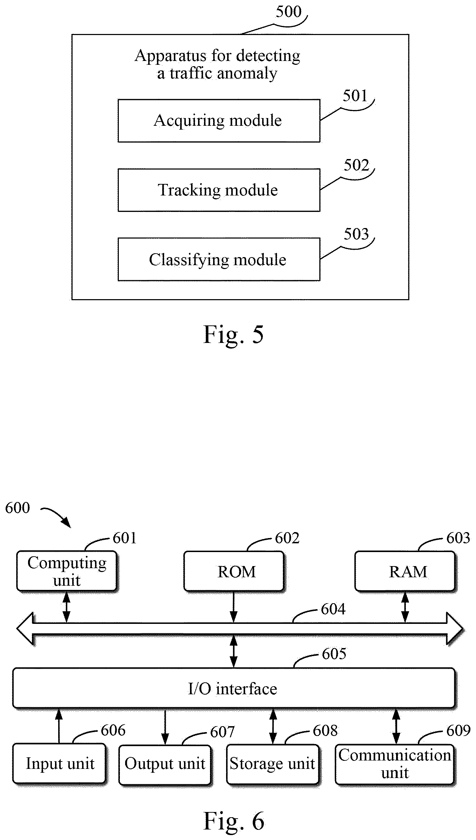

Further referring to Fig. 5, as an implementation of the method shown in the above drawings, the present disclosure provides an embodiment of an apparatus for detecting a traffic anomaly. The embodiment of the apparatus corresponds to the embodiment of the method shown in Fig. 2, and the apparatus may be applied in various electronic devices.

As shown in Fig. 5, the apparatus 500 for detecting a traffic anomaly in this embodiment may include: an acquiring module 501, a tracking module 502 and a classifying module 503. Here, the acquiring module 501 is configured to acquire a traffic video stream. The tracking module 502 is configured to perform vehicle detection tracking on the traffic video stream to determine whether there is an abnormally stopped vehicle, wherein a stop with a time length exceeding a preset time length belongs to an abnormal stop. The classifying module 503 is configured to perform a traffic anomaly classification on a video frame corresponding to the abnormal stop using a decision tree to obtain a traffic anomaly type, if there is the abnormally stopped vehicle, wherein the decision tree is generated based on features for a traffic anomaly detection.

In this embodiment, for specific processes of the acquiring module 501, the tracking module 502 and the classifying module 503 in the apparatus 500 for detecting a traffic anomaly, and their technical effects, reference may be respectively made to relative descriptions of steps 201-203 in the corresponding embodiment of Fig. 2, and thus, the details will not be repeatedly described here.

In some alternative implementations of this embodiment, the classifying module 503 comprises: a counting submodule, configured to count a number of abnormally stopped vehicles; a first determining submodule, configured to determine whether there is a contact between the abnormally stopped vehicles, if the number of the abnormally stopped vehicles is more than one; and a second determining submodule, configured to determine that the traffic anomaly type is a vehicle-vehicle collision type, if there is the contact between the abnormally stopped vehicles.

In some alternative implementations of this embodiment, the classifying module 503 further comprises: a third determining submodule, configured to determine whether there is an abnormal human body in the video frame corresponding to the abnormal stop, if the number of the abnormally stopped vehicles is one, or if the number of the abnormally stopped vehicles is more than one and there is no contact between the abnormally stopped vehicles; and a fourth determining submodule, configured to determine that the traffic anomaly type is a vehicle-human collision type, if there is the abnormal human body.

In some alternative implementations of this embodiment, the classifying module 503 further comprises: a fifth determining submodule, configured to determine a stop position of the abnormally stopped vehicle, if there is no abnormal human body; and a sixth determining submodule, configured to determine that the traffic anomaly type is an illegal parking type, if the stop position of the abnormally stopped vehicle is on a side of a road.

In some alternative implementations of this embodiment, the classifying module 503 further comprises: a seventh determining submodule, configured to determine whether there is a warning sign in the video frame corresponding to the abnormal stop, if the stop position of the abnormally stopped vehicle is not on the side of the road; and an eighth determining submodule, configured to determine that the traffic anomaly type is a break-down type, if there is the warning sign.

In some alternative implementations of this embodiment, the classifying module 503 further comprises: the eighth determining submodule, configured to determine that the traffic anomaly type is the illegal parking type, if there is no warning sign.

In some alternative implementations of this embodiment, the tracking module 502 is further configured to: input the traffic video stream into a pre-trained vehicle detection tracking model to obtain a vehicle detection tracking result; and determine whether there is the abnormally stopped vehicle based on the vehicle detection tracking result.

In some alternative implementations of this embodiment, the first determining submodule is further configured to: calculate an intersection-over-union between bounding boxes of the abnormally stopped vehicles; determine that there is the contact between the abnormally stopped vehicles, if the intersection-over-union is not equal to 0; and determine that there is no contact between the abnormally stopped vehicles, if the intersection-over-union is equal to 0.

In some alternative implementations of this embodiment, the third determining submodule is further configured to: input the video frame corresponding to the abnormal stop into a pre-trained human behavior model to obtain a human behavior result; and determine whether there is the abnormal human body in the video frame corresponding to the abnormal stop based on the human behavior result.

In some alternative implementations of this embodiment, the seventh determining submodule is further configured to: input the video frame corresponding to the abnormal stop into a pre-trained warning sign detection model to obtain a warning sign detection result; and determine whether there is the warning sign in the video frame corresponding to the abnormal stop based on the warning sign detection result.

In the technical solution of the present disclosure, the acquisition, storage, application, etc. of the personal information of a user all comply with the provisions of the relevant laws and regulations, and do not violate public order and good customs.

According to an embodiment of the present disclosure, the present disclosure further provides an electronic device, a readable storage medium and a computer program product.

Fig. 6 is a schematic block diagram of an exemplary electronic device 600 that may be used to implement the embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may alternatively represent various forms of mobile apparatuses such as personal digital processing, a cellular telephone, a smart phone, a wearable device and other similar computing apparatuses. The parts shown herein, their connections and relationships, and their functions are only as examples, and not intended to limit implementations of the present disclosure as described and/or claimed herein.

As shown in Fig. 6, the electronic device 600 includes a computation unit 601, which may execute various appropriate actions and processes in accordance with a computer program stored in a read-only memory (ROM) 602 or a computer program loaded into a random access memory (RAM) 603 from a storage unit 608. The RAM 603 also stores various programs and data required by operations of the device 600. The computation unit 601, the ROM 602 and the RAM 603 are connected to each other through a bus 604. An input/output (I/O) interface 605 is also connected to the bus 604.

The following components in the electronic device 600 are connected to the I/O interface 605: an input unit 606, for example, a keyboard and a mouse; an output unit 607, for example, various types of displays and a speaker; a storage device 608, for example, a magnetic disk and an optical disk; and a communication unit 609, for example, a network card, a modem, a wireless communication transceiver. The communication unit 609 allows the device 600 to exchange information/data with an other device through a computer network such as the Internet and/or various telecommunication networks.

The computation unit 601 may be various general-purpose and/or special-purpose processing assemblies having processing and computing capabilities. Some examples of the computation unit 601 include, but not limited to, a central processing unit (CPU), a graphics processing unit (GPU), various dedicated artificial intelligence (AI) computing chips, various processors that run a machine learning model algorithm, a digital signal processor (DSP), any appropriate processor, controller and microcontroller, etc. The computation unit 601 performs the various methods and processes described above, for example, the method for detecting a traffic anomaly. For example, in some embodiments, the method for detecting a traffic anomaly may be implemented as a computer software program, which is tangibly included in a machine readable medium, for example, the storage device 608. In some embodiments, part or all of the computer program may be loaded into and/or installed on the device 600 via the ROM 602 and/or the communication unit 609. When the computer program is loaded into the RAM 603 and executed by the computation unit 601, one or more steps of the above method for detecting a traffic anomaly may be performed. Alternatively, in other embodiments, the computation unit 601 may be configured to perform the method for detecting a traffic anomaly through any other appropriate approach (e.g., by means of firmware).

The various implementations of the systems and technologies described herein may be implemented in a digital electronic circuit system, an integrated circuit system, a field programmable gate array (FPGA), an application specific integrated circuit (ASIC), an application specific standard product (ASSP), a system-on-chip (SOC), a complex programmable logic device (CPLD), computer hardware, firmware, software and/or combinations thereof. The various implementations may include: being implemented in one or more computer programs, where the one or more computer programs may be executed and/or interpreted on a programmable system including at least one programmable processor, and the programmable processor may be a particular-purpose or general-purpose programmable processor, which may receive data and instructions from a storage system, at least one input device and at least one output device, and send the data and instructions to the storage system, the at least one input device and the at least one output device.

Program codes used to implement the method of embodiments of the present disclosure may be written in any combination of one or more programming languages. These program codes may be provided to a processor or controller of a general-purpose computer, particular-purpose computer or other programmable data processing apparatus, so that the program codes, when executed by the processor or the controller, cause the functions or operations specified in the flowcharts and/or block diagrams to be implemented. These program codes may be executed entirely on a machine, partly on the machine, partly on the machine as a stand-alone software package and partly on a remote machine, or entirely on the remote machine or a server.

In the context of the present disclosure, the machine-readable medium may be a tangible medium that may include or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any appropriate combination thereof. A more particular example of the machine-readable storage medium may include an electronic connection based on one or more lines, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination thereof.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementations of the systems and technologies described herein), or a computing system including any combination of such background component, middleware component or front-end component. The components of the systems may be interconnected by any form or medium of digital data communication (such as a communication network). Examples of the communication network include a local area network (LAN), a wide area network (WAN), and the Internet.

A computer system may include a client and a server. The client and the server are generally remote from each other, and generally interact with each other through the communication network. A relationship between the client and the server is generated by computer programs running on a corresponding computer and having a client-server relationship with each other. The server may be a cloud server, a distributed system server, or a server combined with a blockchain.

It should be appreciated that the steps of reordering, adding or deleting may be executed using the various forms shown above. For example, the steps described in embodiments of the present disclosure may be executed in parallel or sequentially or in a different order, so long as the expected results of the technical schemas provided in embodiments of the present disclosure may be realized, and no limitation is imposed herein.

The above particular implementations are not intended to limit the scope of the present disclosure. It should be appreciated by those skilled in the art that various modifications, combinations, sub-combinations, and substitutions may be made depending on design requirements and other factors. Any modification, equivalent and modification that fall within the spirit and principles of the present disclosure are intended to be included within the scope of the present disclosure.

## Claims

1. A method for detecting a traffic anomaly, comprising:
acquiring a traffic video stream;
performing vehicle detection tracking on the traffic video stream to determine whether there is an abnormally stopped vehicle, wherein a stop with a time length exceeding a preset time length belongs to an abnormal stop; and
performing a traffic anomaly classification on a video frame corresponding to the abnormal stop using a decision tree to obtain a traffic anomaly type, if there is the abnormally stopped vehicle, wherein the decision tree is generated based on features for a traffic anomaly detection.

2. The method according to claim 1, wherein the performing a traffic anomaly classification on a video frame corresponding to the abnormal stop using a decision tree to obtain a traffic anomaly type comprises:
counting a number of abnormally stopped vehicles;
determining whether there is a contact between the abnormally stopped vehicles, if the number of the abnormally stopped vehicles is more than one; and
determining that the traffic anomaly type is a vehicle-vehicle collision type, if there is the contact between the abnormally stopped vehicles.

3. The method according to claim 2, wherein the performing a traffic anomaly classification on a video frame corresponding to the abnormal stop using a decision tree to obtain a traffic anomaly type further comprises:
determining whether there is an abnormal human body in the video frame corresponding to the abnormal stop, if the number of the abnormally stopped vehicles is one, or if the number of the abnormally stopped vehicles is more than one and there is no contact between the abnormally stopped vehicles; and
determining that the traffic anomaly type is a vehicle-human collision type, if there is the abnormal human body.

4. The method according to claim 3, wherein the performing a traffic anomaly classification on a video frame corresponding to the abnormal stop using a decision tree to obtain a traffic anomaly type further comprises:
determining a stop position of the abnormally stopped vehicle, if there is no abnormal human body; and
determining that the traffic anomaly type is an illegal parking type, if the stop position of the abnormally stopped vehicle is on a side of a road.

5. The method according to claim 4, wherein the performing a traffic anomaly classification on a video frame corresponding to the abnormal stop using a decision tree to obtain a traffic anomaly type further comprises:
determining whether there is a warning sign in the video frame corresponding to the abnormal stop, if the stop position of the abnormally stopped vehicle is not on the side of the road; and
determining that the traffic anomaly type is a break-down type, if there is the warning sign.

6. The method according to claim 1, wherein the performing a traffic anomaly classification on a video frame corresponding to the abnormal stop using a decision tree to obtain a traffic anomaly type further comprises:
determining that the traffic anomaly type is the illegal parking type, if there is no warning sign.

7. The method according to any one of claims 1-6, wherein the performing vehicle detection tracking on the traffic video stream to determine whether there is an abnormally stopped vehicle comprises:
inputting the traffic video stream into a pre-trained vehicle detection tracking model to obtain a vehicle detection tracking result; and
determining whether there is the abnormally stopped vehicle based on the vehicle detection tracking result.

8. The method according to any one of claims 2-7, wherein the determining whether there is a contact between the abnormally stopped vehicles comprises:
calculating an intersection-over-union between bounding boxes of the abnormally stopped vehicles;
determining that there is the contact between the abnormally stopped vehicles, if the intersection-over-union is not equal to 0; and
determining that there is no contact between the abnormally stopped vehicles, if the intersection-over-union is equal to 0.

9. The method according to any one of claims 3-8, wherein the determining whether there is an abnormal human body in the video frame corresponding to the abnormal stop comprises:
inputting the video frame corresponding to the abnormal stop into a pre-trained human behavior model to obtain a human behavior result; and
determining whether there is the abnormal human body in the video frame corresponding to the abnormal stop based on the human behavior result.

10. The method according to any one of claims 5-9, wherein the determining whether there is a warning sign in the video frame corresponding to the abnormal stop comprises:
inputting the video frame corresponding to the abnormal stop into a pre-trained warning sign detection model to obtain a warning sign detection result; and
determining whether there is the warning sign in the video frame corresponding to the abnormal stop based on the warning sign detection result.

11. An apparatus for detecting a traffic anomaly, comprising:
an acquiring module, configured to acquire a traffic video stream;
a tracking module, configured to perform vehicle detection tracking on the traffic video stream to determine whether there is an abnormally stopped vehicle, wherein a stop with a time length exceeding a preset time length belongs to an abnormal stop; and
a classifying module, configured to perform a traffic anomaly classification on a video frame corresponding to the abnormal stop using a decision tree to obtain a traffic anomaly type, if there is the abnormally stopped vehicle, wherein the decision tree is generated based on features for a traffic anomaly detection.

12. The apparatus according to claim 11, wherein the classifying module comprises:
a counting submodule, configured to count a number of abnormally stopped vehicles;
a first determining submodule, configured to determine whether there is a contact between the abnormally stopped vehicles, if the number of the abnormally stopped vehicles is more than one; and
a second determining submodule, configured to determine that the traffic anomaly type is a vehicle-vehicle collision type, if there is the contact between the abnormally stopped vehicles.

13. The apparatus according to claim 12, wherein the classifying module further comprises:
a third determining submodule, configured to determine whether there is an abnormal human body in the video frame corresponding to the abnormal stop, if the number of the abnormally stopped vehicles is one, or if the number of the abnormally stopped vehicles is more than one and there is no contact between the abnormally stopped vehicles; and
a fourth determining submodule, configured to determine that the traffic anomaly type is a vehicle-human collision type, if there is the abnormal human body.

14. The apparatus according to claim 13, wherein the classifying module further comprises:
a fifth determining submodule, configured to determine a stop position of the abnormally stopped vehicle, if there is no abnormal human body; and
a sixth determining submodule, configured to determine that the traffic anomaly type is an illegal parking type, if the stop position of the abnormally stopped vehicle is on a side of a road.

15. The apparatus according to claim 14, wherein the classifying module further comprises:
a seventh determining submodule, configured to determine whether there is a warning sign in the video frame corresponding to the abnormal stop, if the stop position of the abnormally stopped vehicle is not on the side of the road; and
an eighth determining submodule, configured to determine that the traffic anomaly type is a break-down type, if there is the warning sign.

16. The apparatus according to claim 11, wherein the classifying module further comprises:
the eighth determining submodule, configured to determine that the traffic anomaly type is the illegal parking type, if there is no warning sign.

17. The apparatus according to any one of claims 11-16, wherein the tracking module is further configured to:
input the traffic video stream into a pre-trained vehicle detection tracking model to obtain a vehicle detection tracking result; and
determine whether there is the abnormally stopped vehicle based on the vehicle detection tracking result.

18. The apparatus according to any one of claims 12-17, wherein the first determining submodule is further configured to:
calculate an intersection-over-union between bounding boxes of the abnormally stopped vehicles;
determine that there is the contact between the abnormally stopped vehicles, if the intersection-over-union is not equal to 0; and
determine that there is no contact between the abnormally stopped vehicles, if the intersection-over-union is equal to 0.

19. The apparatus according to any one of claims 13-18, wherein the third determining submodule is further configured to:
input the video frame corresponding to the abnormal stop into a pre-trained human behavior model to obtain a human behavior result; and
determine whether there is the abnormal human body in the video frame corresponding to the abnormal stop based on the human behavior result.

20. The apparatus according to any one of claims 15-19, wherein the seventh determining submodule is further configured to:
input the video frame corresponding to the abnormal stop into a pre-trained warning sign detection model to obtain a warning sign detection result; and
determine whether there is the warning sign in the video frame corresponding to the abnormal stop based on the warning sign detection result.

21. An electronic device, comprising:
at least one processor; and
a storage device that stores instructions that, when executed by the at least one processor, causes the at least one processor to perform the method according to any one of claims 1-10.

22. A non-transitory computer readable storage medium, storing a computer instruction, wherein the computer instruction is used to cause a computer to perform the method according to any one of claims 1-10.

23. A computer program product, comprising a computer program, wherein the computer program, when executed by a processor, implements the method according to any one of claims 1-10.
